# EUROPEAN PATENT SPECIFICATION

(11) **EP 1 122 212 B1**
(45) Date of publication and mention of the grant of the patent: **09.07.2003**
(21) Application number: 00106229.8
(22) Date of filing: 22.03.2000
(51) Int. Cl.: C01B 33/18, C08K 3/36, C08L 67/06, C09K 3/14

(54) **Composite carbon clack-fumed silica nanostructured particles**
Nanostrukturierte Teilchen bestehend aus Russ und pyrogene Kieselsäure enthaltendem Kompositmaterial
Particules composites nanostructurées de noir de carbone et de silice pyrogénique

(43) Date of publication of application: 08.08.2001
(73) Proprietor: Degussa AG, 40474 Düsseldorf (DE)
(72) Inventor: Kammler, Hendrik K., 8003 Zürich (CH); Pratsinis, Sotiris, Prof. Dr., 8032 Zürich (CH)

(56) References cited:
- EP-A- 0 038 900
- EP-A- 0 622 334
- EP-A- 0 905 188
- FR-A- 2 451 343
- SPICER PATRICK T ET AL: "Flame synthesis of composite carbon black-fumed silica nanostructured particles" J AEROSOL SCI;JOURNAL OF AEROSOL SCIENCE JUN-JUL 1998 ELSEVIER SCI LTD, EXETER, ENGL, vol. 29, no. 5-6, June 1998 (1998-06), pages 647-659, XP001041030

## Description

Although flame synthesis for silica was established since 1943 when Aerosil was produced (Hartmann et al., 1989), its fundamentals are not yet well understood as the particle formation and growth take place extremely fast (less than a second) and process parameters are coupled. Fumed silica was developed as a substitute for carbon black. It is formed by the combustion of silicon tetrachloride or some other silicon containing compound with a hydrogencontaining fuel and air.

It is known to produce fumed silica from SiCl₄, hexamethyldisiloxane (HMDSO) and octamethylcyclotetrasiloxane (OMCTS) in a diffusion and premixed flame using methane as fuel and air or oxygen as oxidant. (Briesen, H. 1997, "Flammensynthese von SiO2-Partikeln ausgehend von organometallischen Siliziumverbindungen", Diplomarbeit am Institut für Thermische Verfahrenstechnik, Universität Karlsruhe, Germany. Briesen, H., Fuhrmann, A., Pratsinis, S. E., 1998, The effect of precursor in flame synthesis of SiO₂", Chem.Eng. Sci. 53(24)4105.) Kammler and Pratsinis studied the synthesis of silica at rather large production rates (more than 100 g/h) using also HMDSO as silica source. They introduced a particle collection system containing a NOMEX baghouse filter, while the use of HMDSO or other organimetallic compounds had the advantage over SiCl4 that they do not produce the corrosive by-products HCl and Cl₂. Kammler, H., Pratsinis, S. E., 1999, "Scaling-up the production of nanosized SiO₂-particles in a double diffusion flame aerosol reactor", Journal of Nanoparticle Res. accepted for publication).

A goal of this study was to investigate the possibility for control of the product particle size at in a Pilot-scale aerosol flame reactor, using a collection system in which there is no limitation in production time.

The subject of the invention are composite carbon black-fumed silica nanostructured paricles comprising
a surface area 30 to 400 m²/g
a carbon content 0,1 to 10 weight %
grind readings lower than 30 homogeneously distributed carbon throughout the silica, but no isolated carbon particles.

A further subject of the invention is a method to produce the composite carbon black-fumed silica nanostructured particles characterized in that organic metallic compounds, especially Hexamethyldisiloxan, are burned in flame of hydrogen and air.

The composite carbon black-fumed silica nanostructured particles according to this invention can be used as filler for rubber and/or Silicon rubber mixtures.

### Apparatus

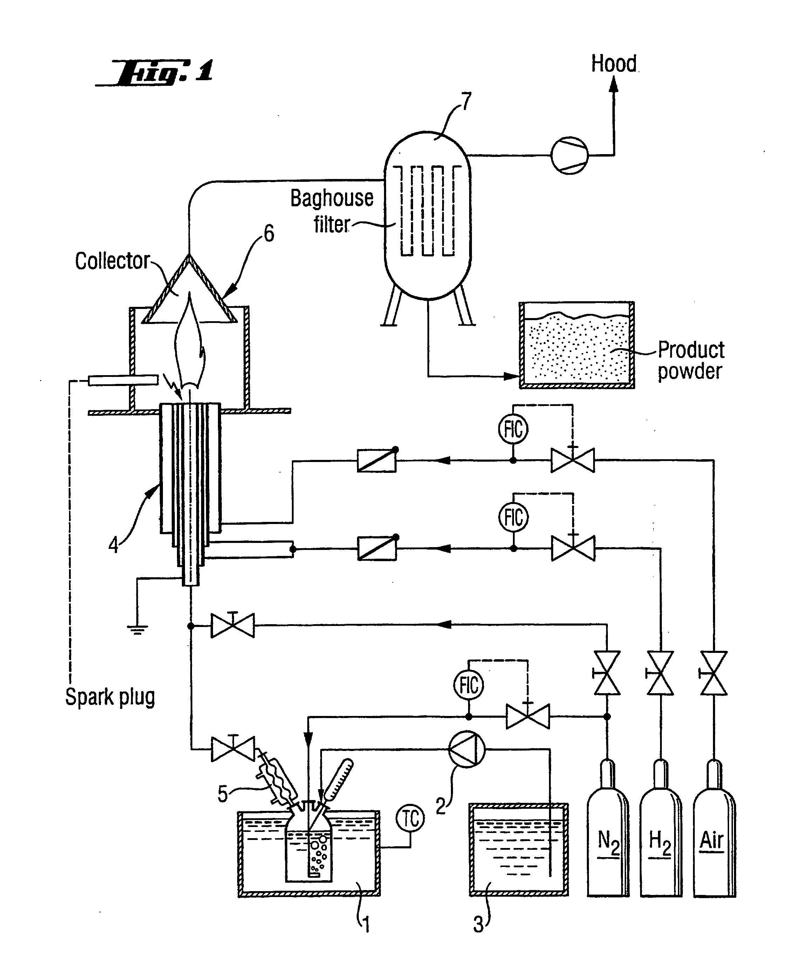

Figure 1 shows a schematic of the experimental set-up of the large scale flame reactor unit. The silica precursor hexamethyldisiloxane is delivered by bubbling clean dry nitrogen gas through a fritted cylinder, placed into a 2 L Woulffian flask 1 filled up to ¾ with HMDSO. Fresh HMDSO could be supplied continuously into the Woulffian flask 1 by a gear pump 2 from a second flask 3 in order to maintain a constant level of liquid HMDSO to keep constant the saturation of the carrier gas even at the highest production rates. The Woulffian flask 1 is stored in a thermostated bath to provide a defined stable HMDSO flask temperature during the experiment. The gases are metered by calibrated mass flow controllers and rotameters. Between the burner 4 and the HMDSO flask 1, a 30 cm long Allihn-condenser 5 is installed. The cooling chamber of the condenser is filled with water which is heated by heating and the exit is filled with glass wool in order to prevent entrainment of small HMDSO droplets into the burner. The tubing between flask and burner is heated at minimum 40 K higher than the HMDSO.

In this study, a stainless steel hydrogen/oxygen diffusion was modified including two more tubes for gas delivery.

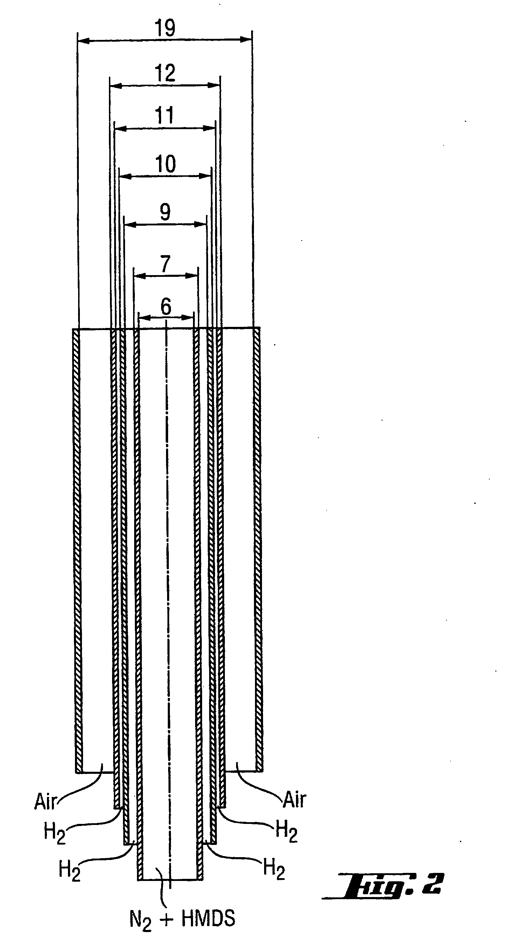

The dimensions of the burner are given in Figure 2. One of the main tasks was to design a burner which is able to produce silica particles at high production rate. Therefore, the air delivering tube (tube 4) had to be designed larger than the other tubes not to create supersonic velocities in the burner, as it was planned to provide an excess of oxygen for combustion. The HMDSO-laden nitrogen stream is fed through the first (center) tube. Hydrogen is supplied through second and third tube. Using this configuration the hydrogen acts as shield gas at the burner exit slowing down the oxidation of the precursor right on the burner tip and prevent particle deposition there. The flame is ignited with a spark plug positioned vertical to the burner, which is removed after the ignition to avoid disturbances of the flame. Disturbtion of the flame is prevented by using a steel chimney 6 (Figure 1) which is open on top and avoids air entrainment into the lower part of the burning zone

Between the mass flow controllers and the burner, pneumatic ball valves are installed. These nitrogen pressured ball valves open when another electro-pneumatic ball valve opens the nitrogen reservoir. These valves are closed when the energy supply either electricity or pressurized nitrogen supply is interrupted. Additional, check valves are installed right before the gases enter the burner to avoid backflow of the gases. The whole piping was designed to withstand explosions. The gas pressure reduction of air and hydrogen is made in two stages: from 200 bar (gas cylinder) to 25 bar and from 25 to 8 bar, which is close to the operating pressure for the mass flow controllers (6.5 bar) as the gas pressure is crucial for maintaining constant mass flow rates. The electronic control permits remote valve control, ignition with the spark plug and fast shut-down in case of any operational problems. Also, if one of the mentioned valves exceed the pre-set range for reliable operation, the control can automatically shut down the flame reactor. The hydrogen and air supply line delivering the gas from the gas cylinders to the flow controllers is fitted with mechanical safety valves that are connected to the vent. The opening pressure is adjusted to 25 bar.

The particle collection unit consists of a commercial "Jet filter 7. Four PTFE (polytetrafouroethylene, Teflon) coated Nomex baghouse filters collect the powder. The filters are set in a stainless steel filter house which has an inlet 0.6 m long 0.12 m diameter pipe with a cone at its open end (Figure 1). The particles are collected on the outside of the baghouse filters by an air suction ventilator which is controlled by a frequency transducer. The particles are removed periodically (every 70 sec) from the baghouse filters by air pressure shocks (timing pulse: 30-300 ms) using 5 bars absolute pressure. The product particles drop into a removable container that is placed at the lower part of the filter house.

### Characterization methods

The air-number is defined as the relative value of the effective (actual) amount of fuel (hydrogen and HMDSO) to oxidant to the stochiometric amount of fuel to oxidant and is the inverse value of the equivalence ratio although air-numbers are most useful for premixed flames.

The HMDSO-concentration is calculated gravimetrically, while the flask temperature is measured by an R-Type thermocouple (Thermoax) and a thermometer. Also the outside wall temperature of the heated manifold and the filter-in- and outlet gas stream temperatures are measured with a thermocouples. They are monitored on a personal computer using LabVIEW software. From the gravimetric measurements, the saturation is calculated by a mass balance for the precursor flask, using the HMDSO equilibrium vapor pressure. The flame location and height are determined visually. Here, the length of the flame is defined as the distance between the beginning and the end of the luminous zone.

The specific surface area with respect to mass, As, of the SiO₂-particles is measured by nitrogen at 77.3 K. Before the adsorption, the samples are under nitrogen atmosphere at 150 °C for two hours, to remove H₂O molecules that are bound to the particle surface from the air moisture. Here, it was discovered that the usage of helium gas instead of nitrogen for degassing leads to significant errors when using small amounts of powder for analysis. Assuming monodisperse, non-aggregated, spherical and non-porous particles, as shown selected powders with full isotherm analysis, the average primary particle diameter of the powder can be calculated by dp = / (Sp·As), where Sp is the density of SiO2, 2.2 g/cm³. This diameter corresponds to the primary particles in the aggregate particles but will be slightly larger than the diameter determined by microscopic analysis since BET analysis does not account for the area lost between the joined primary particles in aggregates. All powders are reproduced at least twice and the specific surface area also is measured twice or thrice for each sample in order to minimize the errors in particle analysis. Data points are averages of these results while the error bars show two times the corresponding standard deviation.

The soot fraction of the collected powders was determined by thermogravimetric analysis. The powders were heated up from room temperature to 105°C, held at this temperature for 2 h, then heated to 600°C (10°C/min) all under nitrogen atmosphere and then further heated up to 1000°C under oxygen atmosphere using always heating rates of 10°C/min. Then the powder remained for 1 h at this final temperature.

Flame temperature measurements were carried out with R-type thermocouples (Moser AG). Measuring the flame temperature in a particle laden flame with a thermocouple at these HMDSO concentrations leads to considerable deposition on the tip of the thermocouple. Therefore, the thermocouples are cleaned carefully after each measurement. The flame temperatures are corrected for radiation loss according to Collis and Williams (1959).

As it was not clear if there is a cold spot inside the burner where the relatively cold air is enters the burner temperature measurements were performed inside the burner. These measurements were performed without hydrogen flowing through the tubes 2 and 3 resulting in no flame, in order not to not to affect the measurements by heat of radiation of the flame using also a thermocouple. Higher air flow rates (223 L/min) than used during the experiments were chosen to test the worst case of flow conditions. Here it was shown that the precursor stream heated up to 57°C while flowing through the heated manifold was cooled down from to 48°C at the point where the cold air lines entered the burner and then was heated up again to 55°C as burner was heated also. The air in the fourth tube had a constant temperature 22±1°C over the whole burner length.

Producing 300 g/h SiO₂, 38% of the total thermal input of the flame is delivered by hydrogen when adding 16.2 L/min H₂, while 65% is supported by H₂ when 48.6 L/min are added. The total energy of combustion increases from 6.5 to 11 kW.

### Influence of the hydrogen flow rate

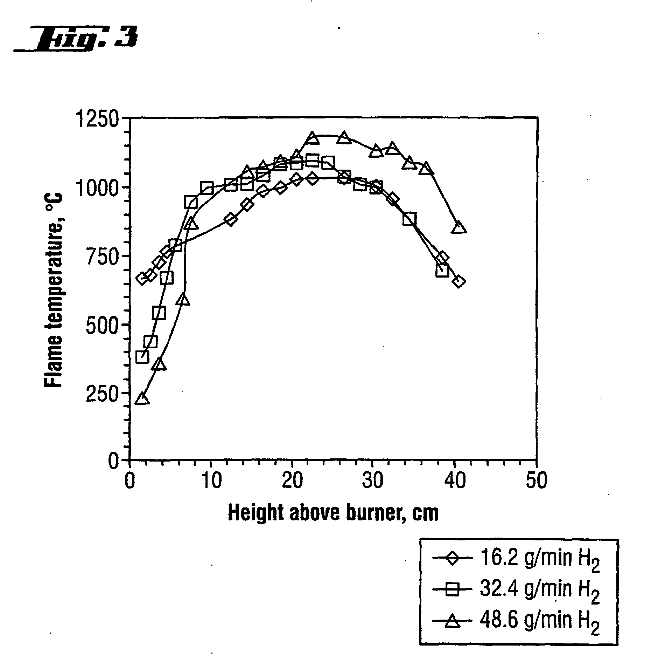

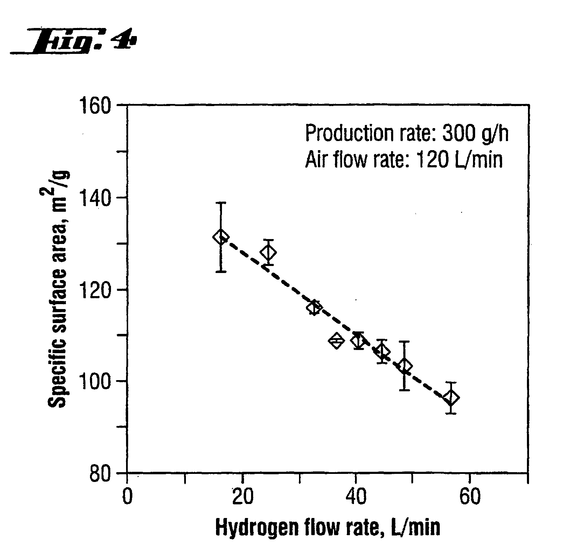

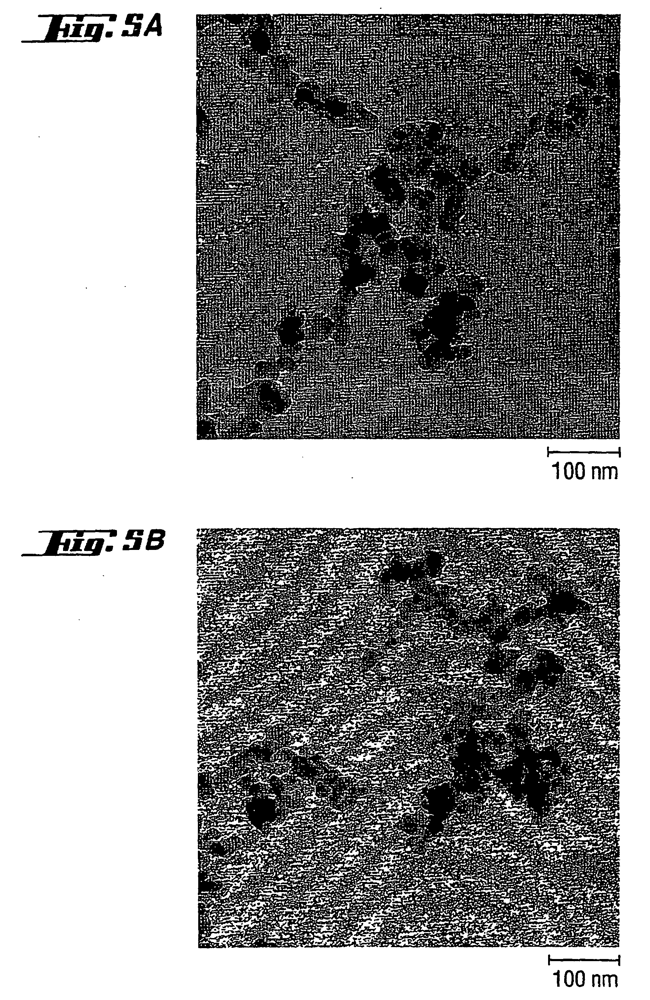

Figure 3 shows axial flame temperatures measured along the center line with an R-Type thermocouple in the particle laden flame for a production rate of 300 g/h SiO₂ and an air flow rate of 120 L/min. Increasing the hydrogen flow from 16.2 to 48.6 L/min increases the maximum flame temperature from 1080 to 1170°C. The flame temperatures in first centimeters of the flame decrease with increasing hydrogen flow rate indicating that the hydrogen cools the flame there as the reaction is diffusion limited. These flame temperatures can give only a qualitative idea of the real flame temperature as particle deposition takes place on the tip of the thermocouple. Therefore, the measured flame temperatures may be too low due to the layer of particles on the thermocouple. Figure 4 shows the influence of the hydrogen flow rate on the specific surface area of the product powder for production rates of 300 g/h and an air flow rate of 120 L/min. The dashed line is the best- fit line of the experimental data, also as in all following figures. Increasing the hydrogen flow rate from 16.2 to 56.7 L/min decreases the specific surface area 131 to 96 m²/g while the primary particle diameter is increased from 21 to 28 nm, respectively. Due to the higher flame temperatures (Figure 3) the sintering rate of the particles increases and therefore the particle growth is accelerated, hence, larger particles are formed. Transmission electron micrographs are corresponding to Figure 4 are given in Figure 5.

Performing full adsorption and desorption isotherms show that particles are non-porous while the t-plot indicates very small slit-shaped pores (Lippens and de Boer, 1965) which are attributed to the necks between the particles in the aggregates.

### Influence of the air flow rate

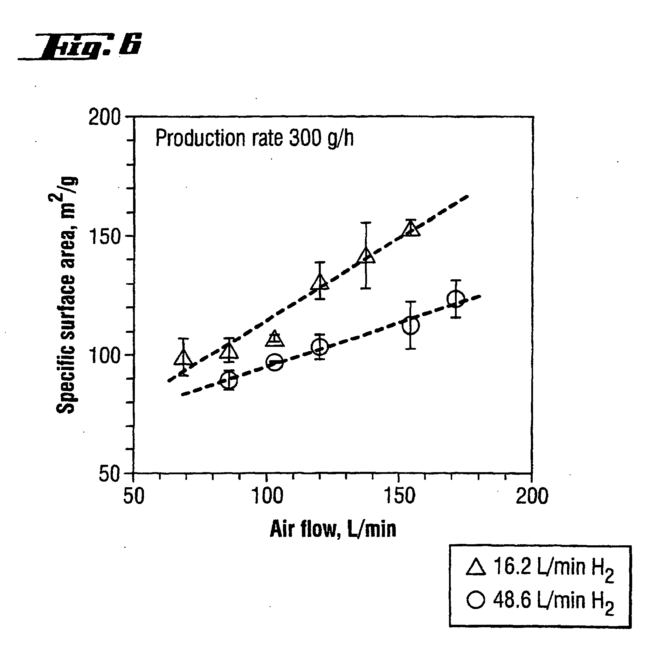

Figure 6 shows the specific surface area, As, as a function of the air flow rate for two hydrogen flow rates at production rates of 300 g/h. Here, using 16.2 L/min (triangles) of hydrogen the specific surface area of the product powder is increased from 99 to 154 m²/g when increasing the air flow rate from 69 to 154 L/min. Assuming no surrounding air would be entrained into the flame, this corresponds to an increase of the air-number from 0.9 to 1.9, respectively, and the burner exit velocity in the air tube increases from 6.7 to 15.1 m/s. Using 48.6 L/min hydrogen (squares) the specific surface area decreases also almost linearly though the influence of the air flow rate is less significant than for 16.2 L/min (triangles). The average primary particle diameter of the powder is reduced from 31 to 22 nm, while the specific surface area increases from 89 to 124 m²/g when the air flow rate is increased from 85.6 to 171.2 L/min. The air-number increases from 0.7 to 1.3. However, the flame height is reduced from 55 to 35 cm increasing the air flow rate from 85.6 to 154.1 L/min and from 50 to 40 cm for 16.2 and 48.6 L/min hydrogen, respectively. This is in agreement to Briesen et al. (1998) who observed a decrease of the flame height of an HMDSO doped methane/air diffusion flame from 7.5 to 5 cm (Briesen, 1997) increasing the total oxidant flow from 2.5 to 5.5 L/min. The specific surface area increased from 170 to 230 m²/g (Briesen et al., 1998). With increasing air flow rate the residence time of the particles in the flame is reduced due to the reduction of the flame height and therefore there is less time to grow and therefore smaller particles are formed. Increasing the air flow rate reduces the flame height and residence time, and subsequently, may reduce the oxidation rate of HMDSO and the yield of the process (Pratsinis et al., 1990). Also the flame temperature is reduced as more air has to be heated up leading to slower growth processes due to sintering and as a result the average primary particle size is also reduced. Using more fuel the flame temperature increases (Figure 3) leading to larger particles as a result of the enhanced growth process and faster sintering.

The specific surface area of the powders using 16.2 L/min hydrogen (triangles) is influenced more significant by increasing the air flow rate than powders produced with 48.6 L/min hydrogen (circles) as the total energy per mol SiO₂ is significantly larger for the latter powders (4470 and 7858 kJ/mol SiO2). Hence, adding air does not dilute the flame in this case.

### Influence of the production rate

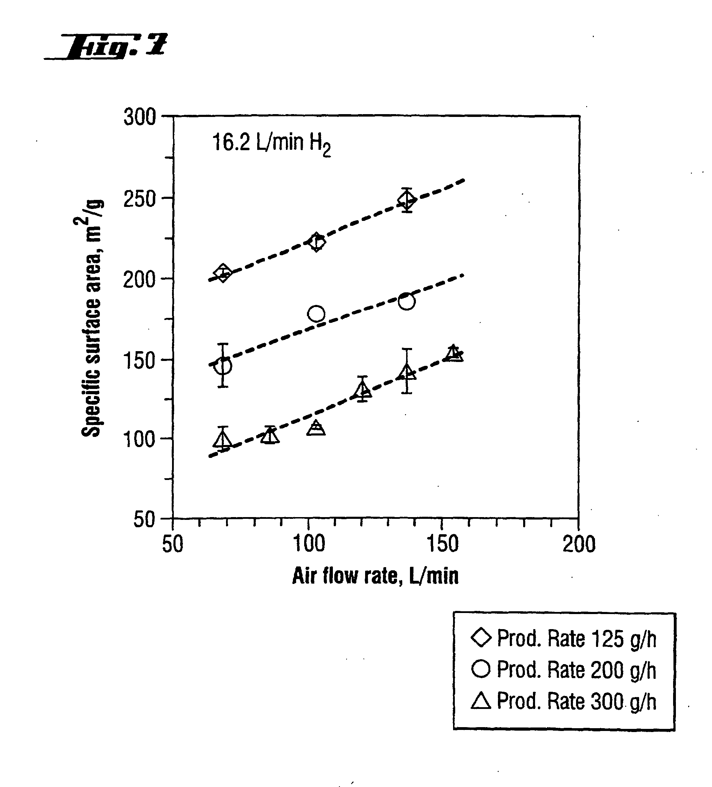

As shown in earlier work (Kammler and Pratsinis, 1999) the production rate or rather the particle concentration in the flame is crucial for the range of particle surface area. Therefore, this effect is also studied with this experimental set-up and is shown in Figure 7. Decreasing the production rate from 300 (triangles) to 200 g/h (squares) leads to significantly smaller particles. The specific surface area increases from 142 to 186 m²/g at a constant air and hydrogen flow rate of 140 and 16.2 L/min, respectively. Decreasing the production rate even further to 125 g/h (triangles), the specific surface area increases to 249 m²/g. The decrease of particle concentration leads to subsequently less particle collisions and growth, while as less HMDSO is delivered into the flame at a constant hydrogen flow of 16.2 L/min (the total thermal input decreases from 6.2 to 4.0 kW). As a result the flame temperature and the flame height decrease. Decreasing flame temperature slows down the growth of particles through the chemical reaction and sintering of silica strongly depend on temperature. Hence, the combination of these influences lead to smaller particles as demonstrated in Figure 7. The slope of the dependence of the specific surface area on the total air flow rate seems to be relatively similar in the experiments with equal hydrogen flow rates (Figure 7) in contrast to Figure 6, where the total amount of hydrogen was varied.

Lower production rates lead to significantly larger surface areas in agreement to Kammler and Pratsinis (1999) who studied the influence of HMDSO delivery rate on the specific surface area in a double diffusion flame with significantly lower burner exit velocities (30 cm/s) using pure oxygen as oxidant. Increasing the production rate from 22 to 130 g/h decreased the specific surface area of the product powder from 175 to 19 m²/g, while the air-number was reduced from 25 to 4. They provided stable gas flow rates and controlled the HMDSO delivery rate by the HMDSO flask temperature like in this study. Increasing the HMDSO delivery rate increased the fuel input into the flame, resulting in an increase of the flame height and therefore longer residence times of the particles in the hot flame regions. Hence, particle growth takes place quicker and as a result of enhanced sintering rates bigger particles are formed. The main difference to the present study was except of the significantly larger flame velocities that Kammler and Pratsinis (1999) used pure oxygen as oxidant and that they operated the combustion process with significantly larger air-numbers.

### Product powder composition

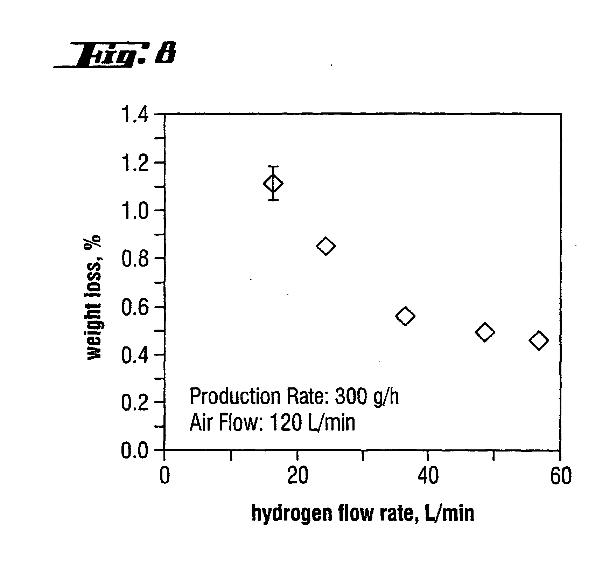

The color of all powders at production rates of 300 g/h using 16.2 L/min hydrogen (Figure 6: triangles) was gray, indicating that the chemical reaction of HMDSO is incomplete, even when the air-numbers were larger than 1 in agreement Kammler and Pratsinis (1999). For the series at the same silica production rate but using 48.6 L/min hydrogen (Figure 6: circles), all the powders were white and fluffy. Also white powders were produced when the production rate was decreased (Figure 7: diamonds and squares). Studying the influence of the hydrogen flow rate at production rates of 300 g/h and 120 L/min air flow rate (Figure 4) the color of the powders changes from gray to white with increasing hydrogen flow. Figure 8 shows the weight loss determined by thermogravimetric analysis reduced for the weight loss of the powders from 30 to 105°C which was attributed to the water vapor sitting on the particle surface. Here it is visible that even white powders loose very little weight indicating some small impurities or removal of crystal-water from the powders. However, comparing the white powders to the commercial powder (Aerosil 200), TGA-analysis shows good agreement.

### List of Figures

Figure 1: Experimental set-up for the production of SiO₂ and SiO₂-C from HMDSO.
Figure 2: Drawing of the used diffusion burner.
Figure 3: Axial temperature profile along the center line of the particle laden flame for production rates of 300 g/h. The temperatures are corrected by radiation loss according to Collis and Williams (1959).
Figure 4: Specific surface area As at production rates of 300 g/h as a function of the hydrogen flow rate.
**Figure 5: TEM pictures .**
Figure 6: Specific surface area As at production rates of 300 g/h as a function of the air flow rate for hydrogen flow rates of 16.2 L/min (triangles) and 48.6 L/min (circles).
Figure 7: Specific surface area As as a function of the air flow rate for production rates of 125 g/h (diamonds), 200 g/h (circles), and 300 g/h (triangles). The air flow rate and the hydrogen flow rate were constant at 120 L/min and 16.2 L/min, respectively.
Figure 8: Soot content of powders collected on the baghouse filter measured with thermogravimetric analysis as a function of the hydrogen flow rate. These data correlate to the data shown in Figures 4.

## Claims

1. Composite carbon black-fumed silica nanostructured particles comprising
a surface area 30 to 400 m²/g
a carbon content 0,1 to 10 weight %
grind readings lower than 30
homogeneously distributed carbon throughout the silica, but
no isolated carbon particles.

2. Method to produce the composite carbon black-fumed silica nanostructured particles according to claim 1, **characterized in that**, organic metallic compounds, especially Hexamethyldisiloxan, are burned in flame of hydrogen and air.

3. Use of the composite carbon black-fumed silica nanostructured particles according to claim 1 as filler in rubber and/or silicon rubber mixtures.

4. Use of the composite carbon black fumed silica nanostructured paricles according to claim 1 as thixotropic agent in unsaturated polyester resin.

5. Use of the composite carbon black fumed silica nanostructured particles according to claim 1 as abrasive in CMP (Chemical mechanical polishing).

## Patentansprüche

1. Nanostrukturierte Kompositpartikel aus Ruß und pyrogener Silika, umfassend
einen Oberflächenbereich von 30 bis 400 m²/g,
einen Kohlenstoffgehalt von 0,1 bis 10 Gew.-%,
Schleifmesswerte von weniger als 30,
homogen verteilten Kohlenstoff in der gesamten Silika, aber
keine isolierten Kohlenstoffpartikel.

2. Verfahren zur Herstellung von nanostrukturierten Kompositpartikeln aus Ruß und pyrogener Silika nach Anspruch 1, **dadurch gekennzeichnet, dass** organische Metallverbindungen, insbesondere Hexamethyldisiloxan, in einer Flamme aus Wasserstoff und Luft verbrannt werden.

3. Verwendung der nanostrukturierten Kompositpartikel aus Ruß und pyrogener Silika nach Anspruch 1 als Füllstoff in Gummi und/oder Silicium-Gummi-Gemischen.

4. Verwendung der nanostrukturierten Kompositpartikel aus Ruß und pyrogener Silika nach Anspruch 1 als thixotropes Mittel in ungesättigtem Polyesterharz.

5. Verwendung der nanostrukturierten Kompositpartikel aus Ruß und pyrogener Silika nach Anspruch 1 als Schleifmittel beim CMP (chemisches-mechanisches Polieren).

## Revendications

1. Particules nanostructurées composites de fumée noir de carbone-silice, comprenant :
- une surface spécifique de 30 à 400 m²/g,
- une teneur en carbone de 0,1 à 10 % en poids,
- des lectures de mouture inférieures à 30,
- carbone distribué de manière homogène dans toute la silice, mais
- pas de particules de carbone isolées.

2. Procédé de fabrication des particules nanostructurées composites de silice fumée noir de carbone selon la revendication 1,
**caractérisé en ce que**
des composés métalliques organiques tels qu'en particulier l'hexaméthyldisiloxane, sont brûlés dans une flamme d'hydrogène et d'air.

3. Utilisation des particules nanostructurées composites de silice fumée noir de carbone selon la revendication 1,
comme produit de remplissage dans du caoutchouc et/ou des mélanges de caoutchouc au silicium.

4. Utilisation des particules nanostructurées composites de silice fumée noir de carbone selon la revendication 1,
comme agent thixotrope dans des résines de polyester non saturées.

5. Utilisation des particules nanostructurées composites de silice fumée noir de carbone selon la revendication 1,
comme abrasif dans un PMC (polissage mécanique chimique).
